# EUROPEAN PATENT APPLICATION

(11) **EP 2 518 938 A2**
(43) Date of publication of application: **31.10.2012**
(21) Application number: 12004749.3
(22) Date of filing: 13.06.2007
(51) Int. Cl.: H04L 12/18

(54) **Point-to-point and point-to-multipoint communications**

(30) Priority: 13.06.2006 US 815555 P
(62) Divisional of application: 07815087.7
(71) Applicant: Aware, Inc., Bedford, MA 01730 (US)
(72) Inventor: Tzannes, Marcos C., Orinda CA 94563 (US)
(74) Representative: Häckel, Stefan

(57) **Abstract**

A network, such as wired and/or wireless LAN, is configured to have both point-to-point and point-to-multipoint connections, The point-to-multipoint connection(s) is used to communicate information between a plurality of the stations (or modem, or transceivers) in the network, whereas the point-to-point connection(s) are used to communicate information between only 2 stations in the network with the ability to, for example, maximize performance (rate/reach/BER/latency/etc) between those two stations. A master station allocates one or more frequency bands to the various point-to-multipoint and point-to-point connections.

## Description

### RELATED APPLICATION DATA

This application aspects the benefit of and priority under 35 U.S.C. § 119(e) to U.S. Patent Application No. 60/815,555, filed June 13, 2006, entitled "Mixed Point-to-Point and Point-to-Multipoint Network," which is incorporated herein by reference in its entirety,

### BACKGROUND

Communications systems are typically classified as either Point-to-Point (PtP) or Point-to-Multipoint (PtM) systems. Examples of Point-to-Point systems are traditional wireline modem systems such as those that use voice-band modems and xDSL modems. Examples of Point-to-Multipoint systems are traditional LAN systems such as wireline LANs (Ethernet, HomePNA, Homeplug®, etc).

PtP systems typically maximize performance (data rate/reach) between 2 transceivers by determining transmission parameters that are specifically designed to provide the best performance over the communication channel. For example, voice-band modems and xDSL modems perform an initialization procedure during which the transmitter and receiver exchange information on the transmission parameters to be used to maximize the performance on the communication channel. For example, multicarrier modems, such as the DSL modems specified in ITU Recommendation ADSL G.992.x and VDSL G.993.x, which are incorporated herein by reference in their entirety, exchange Bit Allocation Tables (BATs) that specify how many bits are to be transmitted on each subchannel.

The point-to-multipoint systems connect a number of transceivers in a network by transmitting signals from one transceiver to plurality of transceivers connected to the same transmission medium. For example, Ethernet Systems use well known Carrier Sense Multiple Access techniques. While these point-to-multipoint techniques allow one station (or transceiver) to communicate with several other stations, they do not typically provide the best performance (rate/reach) for communication between 2 stations, because the transmission parameters are often limited by channel conditions associated with the worst communication channel between all the connected stations.

### Field of the Invention

This invention generally relates to communication systems. More specifically, an exemplary embodiment of this invention relates to mixed Point-to-Point (PtP) and Point-to-Multipoint (PtM) communications networks. In particular, an exemplary embodiment relates to managing frequency band allocation in a PtP and PtM network.

### SUMMARY

According to one exemplary aspect of this invention, a network, such as wired and/or wireless LAN, is configured to have both point-to-point and point-to-multipoint connections. The point-to-multipoint connection(s) is used to communicate information between a plurality of the stations (or modem, or transceivers) in the network, whereas the point-to-point connection(s) are used to communicate information between only 2 stations in the network with the ability to, for example, maximize performance (rate/reach/BER/latency/etc) between those two stations.

In one exemplary embodiment of this invention, there is a master station that controls and allocates frequency bandwidth and/or time to the other stations in the network for information communication. For example, the master station could transmit management information over the point-to-multipoint connection that connects all the stations in the network. This management information would be received by other stations and would specify which frequency bandwidth and/or timeslots the other stations can use for point-to-point and/or point-to-multipoint communications.

Aspects of this invention relate to communication networks including both PtP and PtM connections.

Aspects of this invention also relate to a network, including a plurality of stations, that is capable of comprising at least one point-to-multipoint communication connection (between more than two stations) and at least one point-to-point communication connection (between two stations) operating at the same time, i,e., simultaneously.

Aspects of this invention further relate to the capability of using a first frequency band for at least one point-to-multipoint communication connection and a second frequency band for at least one point-to-point communication connection.

Aspects of this invention are also directed to a master station that is capable of managing the point-to-point and point-to-multipoint communication connections.

Aspects of this invention further relate to a master station that is capable of allocating a frequency band for at least one point-to-point station communication connection or at least one point-to-multipoint communication connection.

Aspects of this invention also relate to the capability of using a point-to-multipoint communication connection to transmit management information between the stations.

Aspects of this invention relate to the capability of disabling a first PtM communication connection and reallocating the frequency band used by the PtM connection to a different PtM and/or PtP communication connection.

Aspects of this invention relate to capability of disabling a PtP communication connection and reallocating the frequency band used by the PtP connection to a different PtP and/or PtM communication connection.

Aspects of this invention still further relate to a network, including a plurality of stations, with the capability of allocating a first frequency band to a first PtP communication connection for a first period of time, disabling the first PtP connection and reallocating the first frequency band to a different PtP or PtM communication connection for a second period of time.

Aspects of this invention also relate to a network, including a plurality of stations, with the capability of allocating a first frequency band to a first PtM communication connection for a first period of time, disabling the first PtM connection, reallocating the first frequency band to a different PtM and/or PtP communication connection for a second period of time.

Aspects of this invention relate to a network including, a plurality of stations, with the capability of establishing at least one point-to-multipoint communication connection between more than two stations and establishing least one point-to-point communication connection between two stations wherein the point-to-multipoint communication connection and the one point-to-point communication connection are capable of operating at the same time.

Aspects of this invention relate to the capability of allocating a first frequency band to at least one point-to-multipoint communication connection and allocating a second frequency band to at least one point-to-point communication connection.

Still further aspects of the invention relate to the use of one or more profiles in conjunction with the allocation of one or more frequency bands.

Even further aspects of the invention relate to the use of one or more profiles in conjunction with the allocation of one or more frequency bands, the management of timeslots and/or the management of physical media types.

Still further aspects of the invention relate to the use of one or more profiles in conjunction with the allocation of one or more frequency bands, the management of timeslots and the configuration of one or more PtP and PtM connections.

Aspects of this invention also relate to methods for configuring a network that includes at least one PtP connection operating in parallel with at least one PtM connection.

Aspects of this invention relate to networks that include the capability of at least one PtP connection operating in parallel with at least one PtM connection.

These and other features and advantages of this invention are described in, or are apparent from, the following detailed description of the exemplary embodiments.

### BRIEF DESCRIPTION OF THE DRAWINGS

The exemplary embodiments of the invention will be described in detail, with reference to the following figures wherein;

Figure 1 illustrates an exemplary network according to this invention.

Figure 2 illustrates a second exemplary network according to this invention.

Figures 3 - 6 illustrate exemplary frequency band allocations according to this invention.

Figure 7 illustrates an exemplary network including PtP and PtM connections according to this invention.

Figures 8 - 10 show various exemplary frequency band and timeslot allocations according to this invention.

Figure 11 illustrates an exemplary master station and station according to this invention.

Figure 12 illustrates an exemplary method for allocating frequency bands and/or timeslots according to this invention.

### DETAILED DESCRIPTION

The exemplary embodiments of this invention will be described in relation to PtP and PtM networks and associated stations. However, it should be appreciated, that in general, the systems and methods of this invention will work equally well for any type of communication system in any environment.

The exemplary systems and methods of this invention will also be described in relation to stations, modems and/or transceivers, such as xDSL modems and VDSL modems, powerline modems, wired or wireless modems, network interface card(s), cable modems, and associated communication hardware, networks, software and communication channels. However, to avoid unnecessarily obscuring the present invention, the following description omits well-known structures and devices that may be shown in block diagram form or otherwise summarized.

For purposes of explanation, numerous details are set forth in order to provide a thorough understanding of the present invention. It should be appreciated however that the present invention may be practiced in a variety of ways beyond the specific details set forth herein.

Furthermore, while the exemplary embodiments illustrated herein show the various components of the system collocated, it is to be appreciated that the various components of the system can be located at distant portions of a distributed network, such as a communications network and/or the Internet, or within a dedicated secure, unsecured and/or encrypted system. Thus, it should be appreciated that the components of the system can be combined into one or more devices, such as a modem, or collocated on a particular node of a distributed network, such as a telecommunications network. As will be appreciated from the following description, and for reasons of computational efficiency, the components of the system can be arranged at any location within a distributed network without affecting the operation of the system. For example, the various components can be located in a Central Office modem (CO, ATU-C, VTU-O), a Customer Premises modem (CPE, ATU-R, VTU-R), an xDSL management device, a network card, or some combination thereof, Similarly, one or more functional portions of the system could be distributed between a modem and an associated computing device.

Furthermore, it should be appreciated that the various links, including the communications channel(s), connecting the elements can be a wired or wireless link, or any combination thereof, or any other known or later developed element(s) that is capable of supplying and/or communicating data to and from the connected elements. The network can also include, for example, one or more switches, hubs and/or routers as is well known in the art. The term module as used herein can refer to any known or later developed hardware, software, firmware, or combination thereof that is capable of performing the functionality associated with that element. The terms determine, calculate and compute, and variations thereof, as used herein are used interchangeably and include any type of methodology, process, mathematical operation or technique. Transmitting modem and Transmitting transceiver as well as Receiving modem and Receiving transceiver are used interchangeably herein. The terms transceiver, modem and station are also used interchangeably herein.

In one exemplary embodiment of this invention, there is a master station that controls and allocates frequency bandwidth and/or time to the other stations in the network for information communication. This information can include, for example, one or more of data, voice, multimedia and in general any type of information. For example, the master station could transmit management information over the PtM connection that connects all the stations in the network. This management information would be received by other stations and would specify which frequency bandwidth and/or timeslots the other stations can use for PtP or PtM communication.

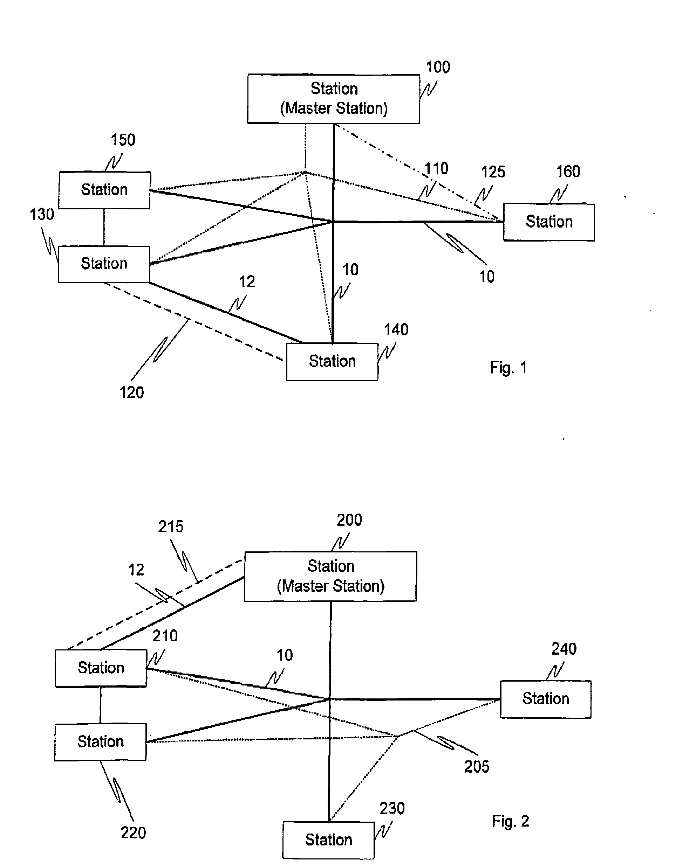

Figure 1 shows an example of this type of network. The stations are connected to one another through a variety of physical media (shown in bold lines) such as coaxial cable, telephone wire, powerlines, air (wireless), etc. - and may be connected to each other by more than one type of physical media. As an example, the physical medium 10 could be powerline or one of the other physical media types. Likewise, physical medium 12 could be, for example, telephone wire or one of the other types of physical media. The connections (PtM and PtP) between the stations can be over any of these physical media.

The master station 100 is connected to a plurality of other stations via at least one point-to-multipoint (PtM) connection 110, which could, for example, be using powerline, on media 10. Additionally, there may be one or more point-to-point (PtP) connections between two particular stations, such as PtP connection 120. Fig. 1 shows an exemplary PtP connection 120 between stations 130 and 140, which could be, for example, on a different media than the PtM connection, such as coaxial cable 12. Fig. 1 also shows a PtP connection 125 between the master station 100 and station 160. This PtP connection could, for example, use the same media 10 as the PtM connection 110, e.g., powerline.

It should be appreciated that in general a PtP connection can be established between any 2 stations, and a PtM connection can be established between any two or more stations.

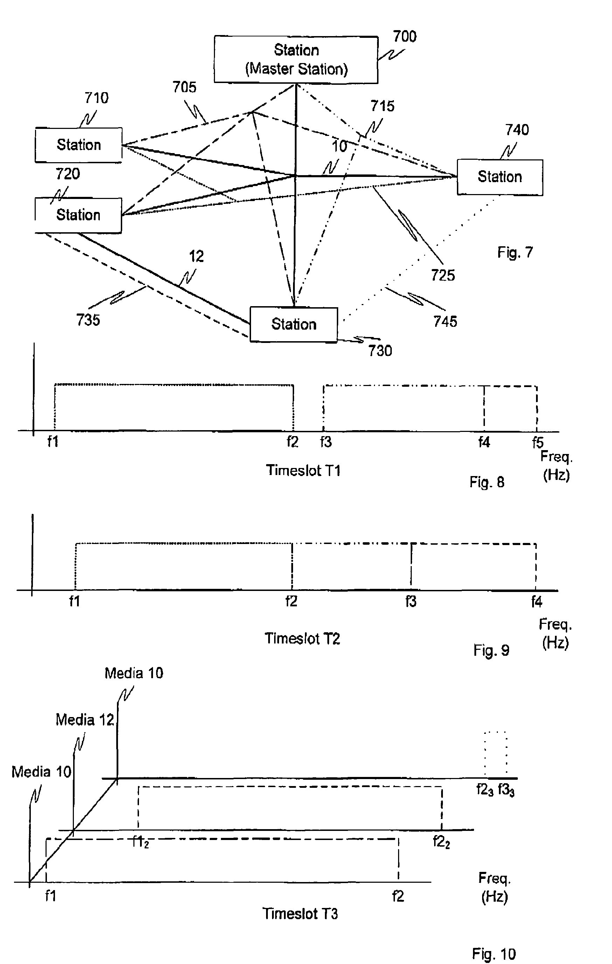

Obviously, while Figure 1 shows only 4 stations, any number of stations is possible. Additionally, while Figure 1 shows only a single PtM connection 110, any number of PtM connections are possible (as illustrated below in relation to Figure 7).

Figure 2 illustrates another exemplary embodiment where the master station 200 has established a PtM connection 205 between stations 210, 220, 230 and 240. In this exemplary embodiment, the master station is not participating in the PtM connection. A PtP connection 215 exists between the master station 200 and station 210. As in Figure 1, the stations are connected to one another through a variety of physical media (shown in bold lines) such as coaxial cable, telephone wire, powerlines, air (wireless), Ethernet (e.g., CAT5 and CAT6), fiber optic, etc. - and may be connected to each other by more than one type of physical media. As an example, the physical medium 10 could be coaxial cable or one of the other physical media types. Likewise, physical medium 12 could be, for example, air (wireless) or one of the other types of physical media.

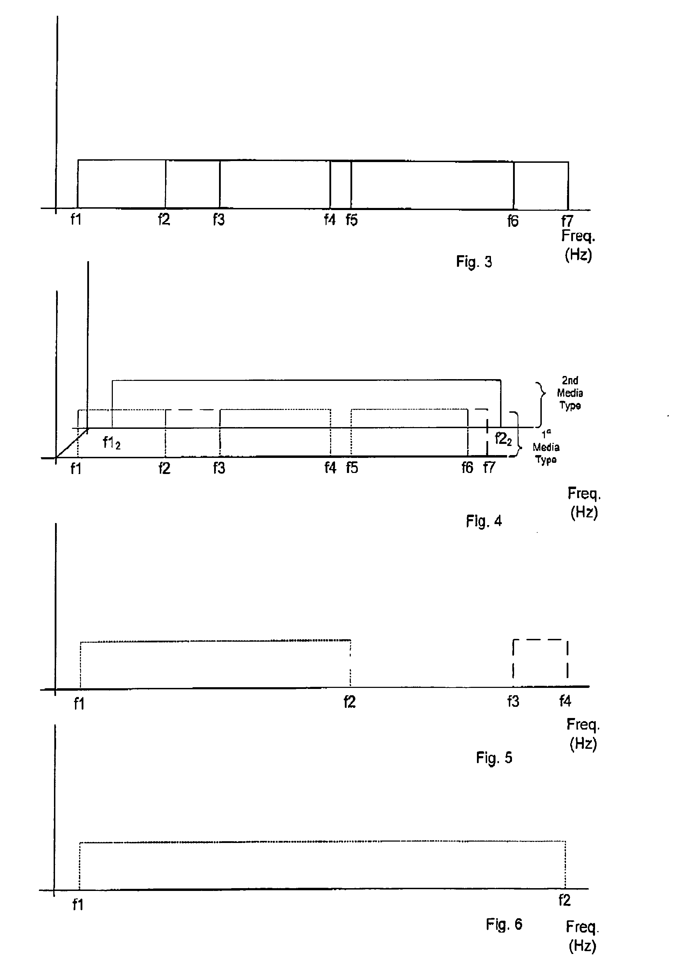

Figure 3 illustrates an example of how the frequency bandwidth of such a network could be divided between PtP and PtM connections. For example, the first frequency band between f1 Hz and f2 Hz could be allocated to a PtM connection that is used to communicate information between a plurality of stations in the network. For example, the management information could specify which frequency bandwidth and/or timeslots the other stations can or should use for PtM or PtP communications. The frequency band between f2 Hz and f3 Hz could be used for a PtP connection between 2 stations (for example, the PtP connection 215 in Figure 2). The frequency band between f3 Hz and f4 Hz could be used for a PtP connection between 2 other stations (for example, an additional PtP connection in Figure 2 (not shown)). The frequency band between f4 Hz and f5 Hz could be used for a second PtM connection, as discussed hereinafter in relation to Fig. 7, between a plurality of stations. Continuing on in this manner, the other frequency bands in Figure 3 can be allocated to other PtM or PtP connections as desired. As shown in Fig. 3 as well as other figures, PtP and PtM connections can be allocated to different frequency bands and this provides the capability for these connections to operate in parallel, i.e., at the same time. Note that the frequency bands do not necessarily need to be for the same media type. In other words, the frequency band f1 to f2 for the PtM connection could be for a telephone wire connection, whereas the frequency band f3 to f4 for the PtP connection could be for a powerline connection. It is apparent that, while this is not shown in this figure, when the frequency bands for the various connections use different media, the actual frequencies bands may overlap as illustrated below.

In some cases certain frequency bands may not be allocated, or may be reserved. These unallocated or reserved bands may be not used for communication for a number of reasons including the following:
The communication channel is too poor for transmission in the that frequency band;
The frequency band is used by some other communication system or electronics device, e.g. HAM, AF/FM, military, etc., radio, xDSL systems, powerline, systems, HPNA systems, cable TV systems, etc.;
There is known interference in a particular frequency band(s).

The above examples describe the bandwidth allocation using frequency bands in PtP and PtM systems. Another parameter that can be managed in PtP and PtM systems is transmission time. For example, in a PtM connection, a master station may allocate certain timeslots for transmission of data between 2 more stations. During a particular timeslot only the designated stations would be allowed to transmit and other stations could be required to be silent.

Figure 4 illustrates another exemplary frequency band allotment, where there are overlapping frequency bands on different media. In this example, the dotted line represents a non-contiguous frequency allocation for a PtM connection on a first media type and a dashed line a frequency allocation for a non-contiguous PtP connection on the first media type. Thus, the PtM frequency band allocation extends from f1 to f2, f3 to f4 and f5 to f6. The frequency band f4 to f5 is unused due to, for example, any of the reasons illustrated above. The PtP connection on the first media type is allocated the frequency band f2 to f3 and f6 to f7. The frequency band f1₂ to f2₂, which, for example, could be for a PtP or PtM connection, for a second media type is illustrated to overlap with a substantial portion of the frequency bands allocated to the first media type.

Fig. 5 illustrates an allocation for a PtM connection between f1 and f2 and a frequency band allocation from f3 to f4 for a PtP connection. The band between f2 and f3 is unused.

Fig. 6 illustrates an example where the frequency band from f1 to f2 is allocated to a PtM connection.

As an example of the networks described in Figures 1 and 2, and the exemplary allocations in Figs. 3 - 6, assume that the communication system is for a wireline LAN located inside a residence that uses coaxial cable and/or telephone lines and/or powerline as the wireline medium connecting the stations. Assume that the total frequency band available for communication is from 1 MHz to 30 MHz. For example, a first frequency band of the communication channel, e.g., from f1=1MHz to f2=2MHz, could be used for a first PtM connection. In this frequency band, the master station would send information to a plurality of stations connected to the LAN where this information specifies how the remaining frequency bands, e.g., 2 to 30 MHz, are to be allocated for communication between the devices. For example, the master station could allocate the frequency band between f2=2 and f3=5 MHz for a first PtP communication between 2 stations in the LAN, the frequency band between f3=5 and f4=9 MHz for a second PtP communication between 2 stations in the LAN, the frequency band between f4=9 and f5=15 MHz for a third PtP communication between 2 stations in the LAN, the frequency band between f5=25 and f6=30 MHz for a second PtM communication between a plurality of stations in the LAN, and so on.

For example, a user wants to watch a movie on a TV that is associated with a first station and the movie data is available on a device associated with a second station. For example, the second station could be attached to a DVD player, multimedia storage appliance, or could be attached to the internet where the movie could be downloaded. In this case, the master station would allocate a frequency band, e.g., from 4 MHz to 6 MHz, to be used for communicating the movie data from second station to the first station. Since this is a point-to-point connection the performance (rate/reach/BER/latency/etc) can be maximized using standard point-to-point transmission methods. For example, the connection between first and second station could be based on transmission methods specified in the VDSL2 ITU-T Recommendation G.993.2, which is incorporated herein by reference in its entirety, which uses lengthy initialization procedures to optimize the communication parameters (e.g. BATs) and maximize performance. Since this point-to-point communication requires duplex transmission and if this is achieved via Frequency Division Duplexing (FDD) (as is the case with VDSL2 systems) the frequency band allocated by the master station needs to be further divided into upstream (US) and downstream (DS) bands, where the US direction is data transmission from the first station to the second station and DS is the direction from the second station from the first station. Since the DS is typically carrying much more data that the US, the connections are often highly asymmetrical in data rate. For example, the DS data rate may be 4 Mbps to transfer the video data whereas the upstream may only be on the order of 100kbps to transfer control (e.g. packet acknowledgment) and management information (e.g. TV channel change requests by the user). The division of bandwidth between US and DS could be specified in advance, e.g. the 4-6 MHz Band will always use the 4-4.5 MHz band for US and the 4.5-6 MHz band for the DS.

Alternatively and/or in addition, the master station could allocate the bands based on how much total data rate is needed and how much data rate is needed in either direction. For example, if the point-to-point connection is being used for to transfer data for an HDTV channel, the master station may allocate more bandwidth to the connection and make the connection highly asymmetrical in data rate. For example, the master station could allocated the 4-8 MHz band to this point-to-point connection, and also partition the bandwidth between US and DS so that the US is uses 4-4.3 MHz and the DS is uses 4.3-8 MHz. This way a large DS data rate can provide the necessary connection for the HDTV channel. Obviously if the total data rate requirement were lower or higher, or the application required more symmetrical data rates US and DS, the master station would allocate the bandwidth accordingly. For example, if the application required a symmetric data rate of 1 Mbps, the master station could allocate the band from 2-3 MHz for transmission of the data, with 2-2.5 MHz being used for DS and 2.5-3 MHz being used for US.

Alternatively, and/or in addition, the 2 stations connected in the point-to-point connection can determine how much frequency band is needed and how to divide the frequency band between US and DS. For example, the stations could perform an initialization procedure where they measure the channel conditions and based on this measurement they determine the required frequency band for transmission.

Alternatively, and/or addition, the station(s) could also determine what bandwidth should be used for US and which bandwidth should be used for DS. For example, the master station could inform the point-to-point stations which frequency band is available for use. For example, the master station could inform the stations that the band between 4-8 MHz is available. The stations would then determine (based on, for example, data rate application requirements and channel conditions) which bandwidth should be used and how it partitioned. For example, the stations could determine that the band between 4 and 4.5 MHz should be used for US transmission and the band between 4.5 and 8 MHz should be used for DS transmission. Additionally, and/or alternatively, the stations could determine that the data rate requirements of the application do not require use of the entire available band. For example the US only needs 4-4.2 MHz and the DS needs only 4.2-5 MHz, In this case the stations would inform the master device that the band between 5 and 8 MHz is not being used and could be allocated to another point-to-point or point-to-multipoint connection. Additionally, and/or alternatively, the bands could be allocated as US and DS bands separately. For example a master device could inform the stations that the US band is between 4 and 8 MHz and the DS band is between 8 and 15 MHz. The stations could then start a point-to-point connection using those frequency bands.

After determining the channel conditions and based on the data rate requirements, the stations may determine that only a portion of the US and DS bands are needed for transmission. For example only 4-6 MHz is needed for US and 8-11 MHz for DS. In this case the stations would inform the master station that the US band between 6 and 8 MHz and that the DS band between 11 and 15 MHz are not being used and could be allocated to another point-to-point or point-to-multipoint connection.

Dynamic Allocation of PtP and PtM Communication Connections.

According to another exemplary aspect of this invention, the PtP and PtM communication connections are changed and/or dynamically allocated over time. The change in PtM and PtM connections may be done for a number of reasons including changes in the active applications and/or changes in the channel conditions and/or physical media type(s) that are available.

For example, a PtP communication connection may be established between 2 stations for viewing a movie video. For example, in Figure 1, if station 130 is connected to a TV and station 140 is connected a DVD player, PtP connection 120 over link 12 may be established to transfer the video content between the stations. However, when user is done watching the movie, the PtP connection 120 could be disconnected. When this happens, the frequency band used for the PtP connection could be reallocated to a different PtP and/or PtM connection. For example, after viewing a first movie, a user may want to watch a second movie on a TV that was attached to a different station (for example, Station 160). Assume that the second movie is also being played on a DVD player attached to station 160. In this example, a new PtP connection could be established between station 140 and station 160 and this PtP connection could use, for example, the same frequency band that was previously used by the PtP connection 120. This example illustrates how frequency bands can be allocated to different PtP or PtM connections over time based on, for example, changing application conditions over time.

As another example, it may be necessary to change the frequency band used for a particular PtP or PtM connection because of changing channel conditions. For example, interference from external devices (e.g. AM/FM radio transmissions, light dimmers, consumer electronics devices) may cause a particular frequency band to be unusable. For example, a frequency band may be allocated to a PtM or PtP connection during the morning, but in the evening this frequency band may be unusable due a new source of interference. In this case, a different frequency band could be used for the PtP or PtM connection between the stations. By changing and/or dynamically allocating the frequency bands for the PtP or PtM connections, the network can continue to be able to provide transmission of information even as applications and channel conditions change over time.

One exemplary advantage of this invention is that it does not necessarily have to use the entire available frequency band for a point-to-multipoint communication between devices in the network. Point-to-multipoint connections have generally low data rate performance (because they use CSMA methods) when compared to point-to-point connections (using transmission parameters optimized for the specific communication channel). Additionally, since many of the connections in a LAN are by nature of the application point-to-point connections (e.g. video transmission from a DVD player to a TV) it may make sense to use point-to-point transmission protocols.

Obviously, in these examples, the master station could be either the first or second station as well as a separate (third) station connected to the network, such as a LAN.

Fig. 7 illustrates an exemplary network including a master station and a plurality of stations according to this invention. In addition to well known componentry, the network includes a master station 700 and stations 710, 720, 730 and 740. There is a PtM connection 705 between Master station 700 and stations 710, 720, 730 and 740. A PtP connection 735 is between stations 720 and 730. A PtM connection 725 is between stations 710, 720 and 740. Another PtM connection 715 exists between Master Station 700 and stations 740 and 730. As in Figure 1, the stations are connected to one another through a variety of physical media (shown in bold lines) such as coaxial cable, telephone wire, powerlines, air (wireless), fiber optic, Ethernet, etc. - and may be connected to each other by more than one type of physical media. As an example, the physical medium 12 could be telephone wire or one of the other physical media types. Likewise, physical medium 10 could be, for example, coaxial cable, fiber optic, or one of the other types of physical media,

Figs. 8-10 illustrate various exemplary configurations of frequency band allocations in various timeslots that can be used with the various connections illustrated in Fig. 7. In general, the illustration of the frequency bands in Figs. 8 - 10 corresponds to the type of connection in Fig. 7. For ease of illustration, the line format (e.g., dashed or dash-dot etc., that is used for a particular connection is the same as the line format that is used for the corresponding frequency band. For example, in Fig. 8, the frequency band f1 to f2 is for the PtM connection 725 during Timeslot T1. The frequency band from f3 to f4 corresponds to the PtM connection 715 between the Master Station 700 and stations 740 and 730 during Timeslot T1. The frequency band from f4 to f5 corresponds to the PtP connection 735 between stations 720 and 730 during Timeslot T1. Note that the PtM connection 705 between Master Station 700 and stations 710, 720, 730 and 740 is not allocated a frequency band during Timeslot T1. Furthermore, the frequency band from f2 to f3 is not allocated to any connection.

The frequency band allocations for the network in Fig. 7 during Timeslot T2 are illustrated in Fig. 9. For this time period, PtM connection 725 is allocated the frequency band from f1 to f2, PtM connection 715 is allocated the frequency band from f2 to f3 and PtP connection 735 allocated the frequency band from f3 to f4, The other connections are not allocated a frequency band.

Fig. 10 represents a third timeslot T3 for the allocation of frequency bands in the network shown in Fig. 7. Here, the frequency band from f1 to f2 is allocated to the PtM connection 705 on media 10. PtP connection 735, on media 12, is allocated the frequency band from f1₂ to f2₂. PtP connection 745, also on media 10, is allocated the frequency band from f2₃ to f3₃.

While specific exemplary allocations are illustrated, it should be appreciated that the allocation of frequency bands can be configured in any manner between one or more PtP and PtM connections, can be varied between timeslots and/or media types, can be contiguous, non-contiguous or any combination thereof, and can also be dynamically assigned and/or updated based on, for example, bandwidth requirements, application(s), available physical media, or in general any aspect of the communication(s).

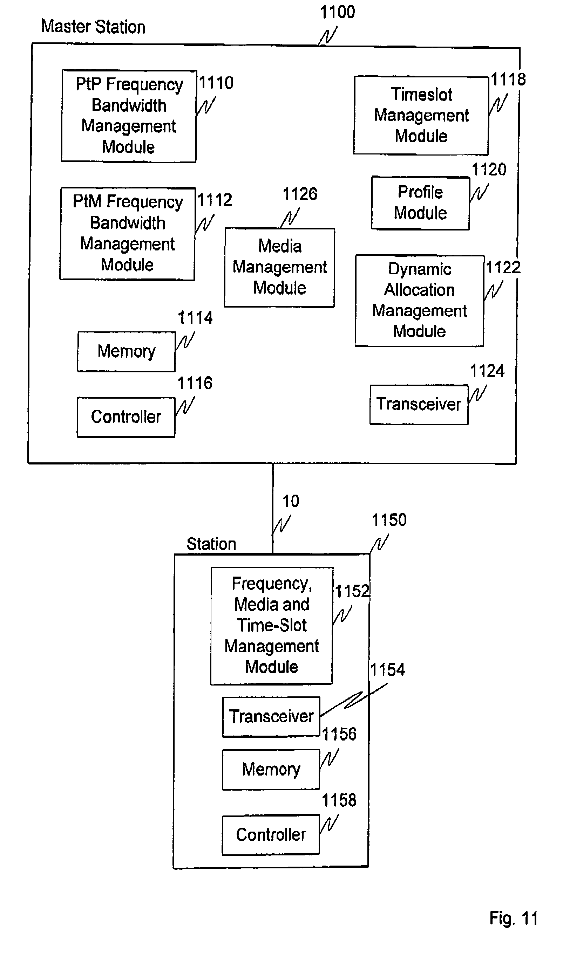

Fig. 11 illustrates an exemplary master station 1100 and station 1150. The master station 1100, in addition to well known componentry, includes a PTP frequency bandwidth management module 1110, a PtM frequency bandwidth management module 1112, a memory 1114, a controller 1116, a timeslot management module 1118, a profile module 1120, a dynamic allocation management module 1122, a transceiver 1124 and a media management module 1126.

The station 1150, in addition to well known componentry, includes a frequency and timeslot management module 1152, a transceiver 1154, a memory 1156 and a controller 1158.

In operation, a station designated as a master station determines a frequency band(s) to allocate to one or more PtP and PtM communication channels. This determination can be based on a number of factors at least including bandwidth requirements, measured conditions, BER requirements, latency requirements, channel conditions, performance requirements, interference issues, available physical media type(s) and/or profile information or the like.

For example, profile information can include such information as minimum latency, expected duration that a communication channel will be needed, or, in general, any parameter or value related to one or more aspects of a communication(s).

The following table illustrates exemplary information that can be associated with a profile and used in assisting with determining appropriate frequency, physical media and/or timeslot allocations.

| **Type of Communication** | **Type of Connection** | **Requirements** |
|---|---|---|
| Gaming | Ptm | Low Latency |
| Movie | PtP | Higher Bandwidth |
| | | Length of Movie |
| HD Video Conference | PtP and PtM | Low Latency |
| | | Low BER |
| | | Higher Bandwidth |
| Garning | PtP | Low Latency |
| High Speed Data | PtM | Minimum Bandwidth |
| | | Requirements |

For example, if the station is establishing a connection for a movie, the profile could indicate the movie is 90 minutes long, is in high definition and there are low BER requirements. The master station 1100, in conjunction with one or more of the PtP frequency bandwidth management module 1110, PtM frequency bandwidth management module 1112, profile module 1120, controller 1116 and memory 1114 could establish a PtP connection with the station 1150, in cooperation with the frequency and timeslot management module 1152 and one or more of the memory 1156 and controller 1158. The connection could be established with the communication of frequency band allocation and timeslot information to the station 1150. Additionally, there could be information that indicated the allocation for the connection is to last 90 minutes (the length of the movie).

Alternatively, or in addition, one or more of the master station 1100 and station 1150 could initiate a measurement routine allowing evaluation of channel conditions. The results of this evaluation could be used, for example, in conjunction with profile requirements to determine the appropriate PtP and/or PtM channel parameters. Current and/or future frequency band usage by one or more stations could also factor into the determination of how to allocate frequency bands.

After the determination is complete regarding the allocation of frequency bands, the allocation is communicated to the appropriate station(s) and the allocation implemented. At any point in time, the allocation can be changed based on, for example, media type, diagnostic information, profile information, a change in communication type(s), information received from one or more stations, communication parameters, or channel/communication requirements. If an updated allocation is needed, an updated allocation is determined and communicated to the appropriate station(s).

The timeslot management module 1118 allows dynamic monitoring and allocation/reallocation of timeslots to one or more stations. For example, the timeslot management module may be aware of a change in bandwidth requirements and update the timeslot allocation based thereon.

As discussed above, and in conjunction with the dynamic allocation management module 1122, a change in PtM and PtM connections may be done for a number of reasons including changes in the active applications and/or changes in the channel conditions.

The dynamic allocation management module 1122 allows monitoring and updating, in cooperation with one or more of the PtM frequency bandwidth management module 1112, PtP frequency bandwidth management module 1110 and media management module 1126, of allocation(s) dynamically based, in general, on any aspect of the channel and/or communications requirements.

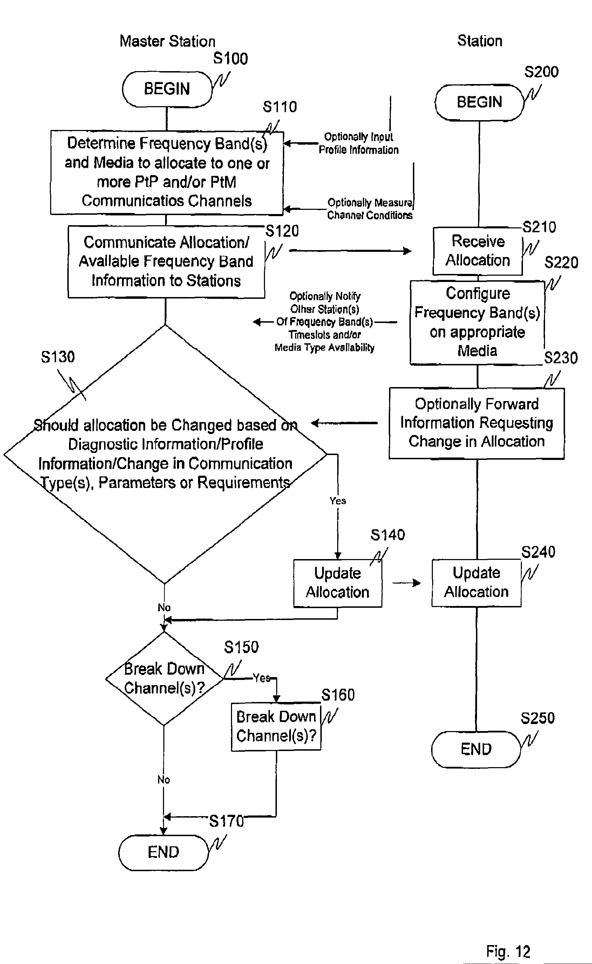

Fig. 12 illustrates an exemplary method for frequency band allocation and inter-transceiver communications. Control begins in step S100 and continues to step S110. In step S 110, and optionally based on received profile information and/or measured channel conditions, the frequency bands and/or timeslots and/or media type(s) to allocate to one or more PtP and PtM communications channels are determined. Next, in step S120, the allocation and/or available frequency band and/or media type and/or timeslot information is communicated to the appropriate station(s). For example, if specific stations have information regarding which frequency bands and media type(s) are available, this information can be considered in the frequency band allocation step.

As an example, one or more of the various stations can communicate available frequency band, timeslot and/or media type information to one or more of the other stations. This information could be used to, for example, assist in ensuring overlapping bands are not assigned to the same station(s) on the same media.

Then, in step S 130, a determination is made whether the allocation should be changed based on one or more of diagnostic information, profile information, application(s), a change in communication type(s), parameters or requirements. If a change in allocation is needed, control continues to step S140 where an updated allocation is determined and distributed to the appropriate station(s). If a change is not required, control continues to step S150 where a determination is made whether to break down the channel. If the channel is to be broken down, control continues to step S160, with control otherwise ending in step S 170.

For a station, control begins in step S200 and continues to step S210. In step S210, an allocation is received. Next, in step S220, one or more frequency bands are configured based on the allocation. Then, in step S230, the station can optionally forward information to the master station requesting an update to the assigned allocation. If an updated allocation is needed, upon receipt of the updated allocation in step S240 the allocation is updated. Control then continues to step S250 where the control sequence ends.

While the above-described flowcharts have been discussed in relation to a particular sequence of events, it should be appreciated that changes to this sequence can occur without materially effecting the operation of the invention. Additionally, the exact sequence of events need not occur as set forth in the exemplary embodiments, but rather the steps can be performed by one or the other transceiver in the communication system provided both transceivers are aware of the technique being used. Additionally, the exemplary techniques illustrated herein are not limited to the specifically illustrated embodiments but can also be utilized with the other exemplary embodiments and each described feature is individually and separately aspectable.

The above-described system can be implemented on wired and/or wireless telecommunications devices, such a modem, a multicarrier modem, a DSL modem, an ADSL modem, an xDSL modem, a VDSL modem, a linecard, a powerline modem, a wired or wireless modem, test equipment, a multicarrier transceiver, a wired and/or wireless wide/local area network system, a satellite communication system, network-based communication systems, such as an IP, Ethernet or ATM system, a modem equipped with diagnostic capabilities, or the like, or on a separate programmed general purpose computer having a communications device or in conjunction with any of the following communications protocols: CDSL, ADSL2, ADSL2+, VDSL1, VDSL2, HDSL, DSL Lite, IDSL, RADSL, SDSL, UDSL, or the like.

Additionally, the systems, methods and protocols of this invention can be implemented on a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device such as PLD, PLA, FPGA, PAL, a modem, a transmitter/receiver, any comparable means, or the like. In general, any device capable of implementing a state machine that is in turn capable of implementing the methodology illustrated herein can be used to implement the various communication methods, protocols and techniques according to this invention.

Furthermore, the disclosed methods may be readily implemented in software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized. The communication systems, methods and protocols illustrated herein can be readily implemented in hardware and/or software using any known or later developed systems or structures, devices and/or software by those of ordinary skill in the applicable art from the functional description provided herein and with a general basic knowledge of the computer and telecommunications arts.

Moreover, the disclosed methods may be readily implemented in software that can be stored on a storage medium, executed on programmed general-purpose computer with the cooperation of a controller and memory, a special purpose computer, a microprocessor, or the like. In these instances, the systems and methods of this invention can be implemented as program embedded on personal computer such as an applet, JAVA® or CGI script, as a resource residing on a server or computer workstation, as a routine embedded in a dedicated communication system or system component, or the like. The system can also be implemented by physically incorporating the system and/or method into a software and/or hardware system, such as the hardware and software systems of a communications transceiver.

It is therefore apparent that there has been provided, in accordance with the present invention, systems and methods for PtP and PtM connection management While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.
Further Aspects of the invention:
1. A method comprising configuring a network that includes at least one point-to-point connection operating in parallel with at least one point-to-multipoint connection.
2. The method of aspect 1, further comprising allocating one or more frequency bands.
3. The method of aspect 1, wherein at least two of frequency bands are associated with different media types.
4. The method of aspect 1, wherein the point-to-point connection is associated with a first physical media type and the point-to-multipoint connection is associated with a second, different, physical media type.
5. The method of aspect 1, wherein the point-to-point connection is associated with a first physical media type and the point-to-multipoint connection is associated with a second physical media type.
6. The method of aspect 1, wherein the point-to-point connection and the point-to-multipoint connection are associated with the same physical media type.
7. The method of any one of aspects 3 - 6, wherein the physical media types are one of coaxial cable, twisted pair, powerline, wireless, telephone, optical fiber, Ethernet cable and air.
8. The method of aspect 1, wherein at least two of the frequency bands on different media types at least partially overlap.
9. The method of aspect 1, wherein different frequency bands are assigned to different timeslots.
10. The method of aspect 1, wherein the same frequency band is used in the same timeslot.
11. The method of aspect 1, wherein the same frequency band is used in the same timeslot on different physical media.
12. The method of aspect 1, wherein the same frequency band is used in the same timeslot on different physical media for different connection types.
13. The method of aspect 1, wherein the same frequency band is used in the same timeslot and allocated to different physical media for different connection types.
14. The method of aspect 1, wherein a station is connected to the point-to-multipoint connection and the point-to-point connection.
15. The method of aspect 1, wherein a master station configures the network based on one or more of frequency bands, timeslots, applications, bandwidth requirements, physical media type and information type.
16. The method of aspect 15, wherein the information type is one or more of data, voice, multimedia and video.
17. A network comprising a plurality of stations including at least one point-to-multipoint communication connection between more than two stations and at least one point-to-point communication connection between two stations, wherein the point-to-point communication connection and the point-to-multipoint communication connection are both operational on the network at the same time.
18. A network comprising:
   a plurality of stations including:
      more than two stations interconnected and communicating within a point-to-multipoint communication connection; and
      two stations interconnected and communicating within by a point-to-point communication connection,
      wherein the communicating is occurring at the same time.
19. A network comprising a plurality of stations, wherein:
   more than two stations communicate over a point-to-multipoint communication connection while two other stations communicate over a point-to-point communication connection.
20. A network comprising a plurality of stations, wherein:
   more than two of the plurality of stations communicate over a point-to-multipoint communication connection while two of the plurality of stations communicate over a point-to-point communication connection.
21. A communications network comprising:
   a point-to-point connection operating concurrently with a point-to-multipoint connection.
22. The network of aspect 21, wherein the point-to-multipoint connection is between a plurality of stations.
23. The network of aspect 22, wherein one of the stations is a master station.
24. The network of aspect 22, wherein there are a plurality of master stations.
25. The network of aspect 21, wherein the point-to-point connection is over a first physical media type and the point-to-multipoint connection is over a second physical media type.
26. The network of aspect 21, wherein the point-to-point connection and the point-to-multipoint connection are over the same physical media type.
27. A network including a plurality of stations that is capable of comprising at least one point-to-multipoint (PtM) communication connection between more than two stations and at least one point-to-point (PtP)communication connection between two stations, wherein the at least one PtM connection and the at least one PtP connection are capable of operating at the same time.
28. The network of aspect 27, wherein the at least one point-to-multipoint communication connection uses a first frequency band and the at least one point-to-point communication connection uses a second frequency band
29. The network of aspect 27, wherein a master station manages the point-to-point and point-to-multipoint communication connections.
30. The network of aspect 27, wherein a master station allocates the frequency band for at least one point-to-point station communication connection or at least one point-to-multipoint communication connection.
31. The network of aspect 3 0, wherein a point-to-multipoint communication connection is used to transmit management information between the stations.
32. The network of aspect 31, wherein the first PtM communication connection is disabled and the first frequency band is reallocated to a different PtM or PtP communication connection.
33. The network of aspect 28, wherein the first PtP communication connection is disabled and the second frequency band is reallocated to a different PtP or PtM communication connection.
34. In a network including a plurality of stations a method comprising:
   allocating a first frequency band to a first PTP communication connection for a first period of time;
   disabling the first PTP connection; and
   reallocating the first frequency band to a different PtP or PtM communication connection for a second period of time.
35. In a network including a plurality of stations a method comprising:
   allocating a first frequency band to a first PtM communication connection for a first period of time;
   disabling the first PtM connection; and
   reallocating the first frequency band to a different PtM or PtP communication connection for a second period of time.
36. In a network including a plurality of stations a method comprising:
   establishing at least one point-to-multipoint (PtM)communication connection between more than two stations;
   establishing at least one point-to-point (PtP) communication connection between two stations, wherein the at least one PtM connection and the at least one PtP connection are capable of operating at the same time.
37. The method of aspect 36, further comprising allocating a first frequency band to the at least one point-to-multipoint communication connection and allocating a second frequency band to the at least one point-to-point communication connection.
38. The method of aspect 36, wherein a master station manages the point-to-point and point-to-multipoint communication connections.
39. The method of aspect 3 6, wherein a master station allocates the frequency band for at least one point-to-point station communication connection or at least one point-to-multipoint communication connection.
40. The method of aspect 36, wherein a point-to-multipoint communication connection is used to transmit management information between the stations.
41. The method of 37, further comprising disabling the first PtM communication connection and reallocating the first frequency band to a different PtM or PtP communication connection.
42. The method of aspect 37, further comprising disabling the first PtP communication connection and reallocating the second frequency band to a different PtP or PtM communication connection.
43. A network that includes the capability of at least one point-to-point connection operating in parallel with at least one point-to-multipoint connection.
44. The network of aspect 43, further comprising one or more allocated frequency bands.
45. The network of aspect 43, wherein at least two of frequency bands are associated with different media types.
46. The network of aspect 43, wherein the point-to-point connection is associated with a first physical media type and the point-to-multipoint connection is associated with a second, different, physical media type.
47. The network of aspect 43, wherein the point-to-point connection is associated with a first physical media type and the point-to-multipoint connection is associated with a second physical media type.
48. The network of aspect 43, wherein the point-to-point connection and the point-to-multipoint connection are associated with the same physical media type.
49. The network of any one of aspects 45 - 48, wherein the physical media types are one of coaxial cable, twisted pair, powerline, wireless, telephone, optical fiber, Ethernet cable and air.
50. The network of aspect 43, wherein at least two of the frequency bands on different media types at least partially overlap.
51. The network of aspect 43, wherein different frequency bands are assigned to different timeslots.
52. The network of aspect 43, wherein the same frequency band is used in the same timeslot.
53. The network of aspect 43, wherein the same frequency band is used in the same timeslot on different physical media.
54. The network of aspect 43, wherein the same frequency band is used in the same timeslot on different physical media for different connection types.
55. The network of aspect 43, wherein the same frequency band is used in the same timeslot and allocated to different physical media for different connection types.
56. The network of aspect 43, wherein a station is connected to the point-to-multipoint connection and the point-to-point connection.
57. The network of aspect 43, wherein a master station configures the network based on one or more of frequency bands, timeslots, applications, bandwidth requirements, physical media type and information type.
58. The network of aspect 57, wherein the information type is one or more of data, voice, multimedia and video.
59. The network of aspect 43, wherein a master station allocates one or more frequency bands.
60. The network of aspect 43, wherein a master station reallocates one or more frequency bands.
61. The network of aspect 43, wherein a master station reallocates one or more frequency bands based on a change in communication requirements.
62. The network of aspect 43, wherein a master station reallocates one or more overlapping frequency bands based on a change in communication requirements.
63. The network of aspect 43, wherein a master station reallocates one or more non-overlapping frequency bands based on a change in communication requirements.
64. An information storage media including information that when executed performs the steps in any of the above method aspects.
65. A communication protocol that performs the steps in any of the above method aspects.
66. Means for performing the steps in any of the above method aspects.
67. Any one or more of the features as substantially disclosed herein.
68. Means for configuring a network that includes at least one point-to-point connection operating in parallel with at least one point-to-multipoint connection.
69. The means of aspect 68, further comprising means for allocating one or more frequency bands.
70. The means of aspect 68, wherein at least two of frequency bands are associated with different physical media types.
71. The means of aspect 68, wherein the point-to-point connection is associated with a first physical media type and the point-to-multipoint connection is associated with a second, different, physical media type.
72. The means of aspect 68, wherein the point-to-point connection is associated with a first physical media type and the point-to-multipoint connection is associated with a second physical media type.
73. The means of aspect 68, wherein the point-to-point connection and the point-to-multipoint connection are associated with the same physical media type.
74. The means of any one of aspects 71-73, wherein the physical media types are one of coaxial cable, twisted pair, powerline, wireless, telephone, optical fiber, Ethernet cable and air.
75. The means of aspect 68, wherein at least two of the frequency bands on different media types at least partially overlap.
76. The means of aspect 68, wherein different frequency bands are assigned to different timeslots.
77. The means of aspect 68, wherein the same frequency band is used in the same timeslot.
78. The means of aspect 68, wherein the same frequency band is used in the same timeslot on different physical media.
79. The means of aspect 68, wherein the same frequency band is used in the same timeslot on different physical media for different connection types.
80. The means of aspect 68, wherein the same frequency band is used in the same timeslot and allocated to different physical media for different connection types.
81. The means of aspect 68, wherein a station is connected to the point-to-multipoint connection and the point-to-point connection.
82. The means of aspect 68, wherein a master station configures the network based on one or more of frequency bands, timeslots, applications, bandwidth requirements, physical media type and information type.
83. The means of aspect 82, wherein the information type is one or more of data, voice, multimedia and video.

## Claims

1. A method comprising:
configuring a network that includes at least one point-to-point connection operating in parallel with at least one point-to-multipoint connection, wherein the point-to-multipoint connection is used to communicate management information between a plurality of the stations in the network, and/or
establishing at least one point-to-multipoint (PtM)communication connection between more than two stations of a network including a plurality of stations;
establishing at least one point-to-point (PtP) communication connection between two stations, wherein the at least one PtM connection and the at least one PtP connection are capable of operating at the same time, wherein the point-to-multipoint connection is used to communicate management information between a plurality of the stations in the network.

2. The method of claim 1, further comprising allocating one or more frequency bands, and/or,
wherein at least two of frequency bands are associated with different media types, and/or wherein at least two of the frequency bands on different media types at least partially overlap, and/or,
wherein different frequency bands are assigned to different timeslots, and/or,
wherein the same frequency band is used in the same timeslot, and/or,
wherein the same frequency band is used in the same timeslot on different physical media, and/or,
wherein the same frequency band is used in the same timeslot on different physical media for different connection types, and/or,
wherein the same frequency band is used in the same timeslot and allocated to different physical media for different connection types, and/or,
wherein a first frequency band is allocated to a first PTP communication connection for a first period of time, the first PTP connection is disabled and the first frequency band is reallocated to a different PtP or PtM communication connection for a second period of time, and/or,
wherein a first frequency band is allocated to a first PtM communication connection for a first period of time, the first PtM connection is disabled and the first frequency band is real-locctaed to a different PtM or PtP communication connection for a second period of time.

3. The method of claim 1 or 2,
wherein the point-to-point connection is associated with a first physical media type and the point-to-multipoint connection is associated with a second, different, physical media type, and/or
wherein the point-to-point connection is associated with a first physical media type and the point-to-multipoint connection is associated with a second physical media type, and/or, wherein the point-to-point connection and the point-to-multipoint connection are associated with the same physical media type, and/or,

4. The method of any one of claims 1 to 3,
wherein the physical media types are one of coaxial cable, twisted pair, powerline, wireless, telephone, optical fiber, Ethernet cable and air, and/or,
wherein a station is connected to the point-to-multipoint connection and the point-to-point connection, and/or,
wherein a master station configures the network based on one or more of frequency bands, timeslots, applications, bandwidth requirements, physical media type and information type, and/or,
wherein the information type is one or more of data, voice, multimedia and video, and/or, wherein the point-to-point communication connection and the point-to-multipoint communication connection are both operational on the network at the same time, and/or,
wherein the management information would be received by other stations and would specify which frequency Bandwidth and/or timeslots the other stations can use for point-to-point and/or point-to-multipoint communications, and/or,
wherein the stations are one or modems or transceivers, and/or,

5. The method of any one of claims 1 to 4, wherein the frequency bandwidth of the network is divided between PtP and PtM connections, wherein a first frequency band between f1 Hz and f2 Hz is be allocated to a PtM connection that is used to communicate information between a plurality of stations in the network wherein the management information specifiesy which frequency bandwidth and/or timeslots the other stations can or should use for PtM or PtP communications, and/or a frequency band between f2 Hz and f3 Hz is used for a PtP connection between 2 stations, and/or the frequency band between f3 Hz and f4 Hz is used for a PtP connection between 2 other stations, and/or the frequency band between f4 Hz and f5 Hz is used for a second PtM connection between a plurality of stations, and/or,
wherein PtP and PtM connections can be allocated to different frequency bands to provide the capability for these connections to operate in parallel, i.e., at the same time and the frequency bands do not necessarily need to be for the same media type, and/or
wherein the frequency band f1 to f2 for the PtM connection is for a telephone wire connection, whereas the frequency band f3 to f4 for the PtP connection is for a powerline connection

6. The method of any one of claims 1 to 5, further comprising:
allocating a first frequency band to the at least one point-to-multipoint communication connection and allocating a second frequency band to the at least one point-to-point communication connection, and/or,
wherein a master station manages the point-to-point and point-to-multipoint communication connections, and/or,
wherein a master station allocates the frequency band for at least one point-to-point station communication connection or at least one point-to-multipoint communication connection, and/or,
wherein a point-to-multipoint communication connection is used to transmit management information between the stations, and/or,
further comprising disabling the first PtM communication connection and reallocating the first frequency band to a different PtM or PtP communication connection, and/or,
further comprising disabling the first PtP communication connection and reallocating the second frequency band to a different PtP or PtM communication connection, and/or,

7. Means for configuring a network that includes at least one point-to-point connection operating in parallel with at least one point-to-multipoint connection, wherein the point-to-multipoint connection is used to communicate management information between a plurality of the stations in the network.

8. The means of claim 7, further comprising:
means for allocating one or more frequency bands, preferably
wherein at least two of frequency bands are associated with different physical media types, and/or,
wherein at least two of the frequency bands on different media types at least partially overlap, and/or,
wherein different frequency bands are assigned to different timeslots, and/or,
wherein the same frequency band is used in the same timeslot, and/or,
wherein the same frequency band is used in the same timeslot on different physical media, and/or,
wherein the same frequency band is used in the same timeslot on different physical media for different connection types, and/or,
wherein the same frequency band is used in the same timeslot and allocated to different physical media for different connection types, and/or,

9. The means of claim 7 or 8,
wherein the point-to-point connection is associated with a first physical media type and the point-to-multipoint connection is associated with a second, different, physical media type, and/or,
wherein the point-to-point connection is associated with a first physical media type and the point-to-multipoint connection is associated with a second physical media type, and/or, wherein the point-to-point connection and the point-to-multipoint connection are associated with the same physical media type, and/or,
wherein the physical media types are one of coaxial cable, twisted pair, powerline, wireless, telephone, optical fiber, Ethernet cable and air
wherein a station is connected to the point-to-multipoint connection and the point-to-point connection, and/or,
wherein a master station configures the network based on one or more of frequency bands, timeslots, applications, bandwidth requirements, physical media type and information type, and/or,
wherein the information type is one or more of data, voice, multimedia and video.

10. The means of any one of claims 7 to 9, further comprising a timeslot management module that allows dynamic monitoring and altocation/reallocation of timeslots to one or more station, wherein the timeslot management module may be aware of a change in bandwidth requirements and update the timeslot allocation based thereon.

11. The means of any one of claims 7 to 10, wherein a change in PtM and PtM connections is performed based on the active applications and/or changes in the channel conditions.

12. The means of any one of claims 7 to 11, wherein a change the frequency band used for a particular PtP or PtM connection is updated based on changing channel conditions.

13. The means of any one of claims 7 to 12, wherein for the frequency band allotment, there are overlapping frequency bands on different media including a non-contiguous frequency allocation for a PtM connection on a first media type and a frequency allocation for a non-contiguous PtP connection on the first media type.

14. The means of any one of claims 7 to 13, wherein the 2 stations connected in the point-to-point connection determine how much frequency band is needed and how to divide the frequency band between US and DS, wherein the stations perform an initialization procedure where they measure the channel conditions and based on this measurement they determine the required frequency band for transmission, and/or, the station(s) determine what bandwidth should be used for US (UpStream) and which bandwidth should be used for DS (DownStream).

15. The means of any one of claims 7 to 14, wherein after a determination is complete regarding the allocation of frequency bands, the allocation is communicated to the appropriate station(s) and the allocation implemented, and/or, at any point in time, the allocation can be changed based on, for example, media type, diagnostic information, profile information, a change in communication type(s), information received from one or more stations, communication parameters, or channel/communication requirements, and if an updated allocation is needed, an updated allocation is determined and communicated to the appropriate station(s).
